# EUROPEAN PATENT APPLICATION

(11) **EP 1 926 051 A2**
(43) Date of publication of application: **28.05.2008**
(21) Application number: 07022527.1
(22) Date of filing: 21.11.2007
(51) Int. Cl.: G06T 15/00

(54) **Network connected media platform**

(30) Priority: 21.11.2006 NZ 55145206
(71) Applicant: MindSpace Solutions Ltd., Christchurch 8052 (NZ)
(72) Inventor: Woods, Eric, Christchurch 8052 (NZ)
(74) Representative: Boyce, Conor

(57) **Abstract**

A system and method enabling the display of mixed reality objects on a computer operated by a user. The system comprises player software and a content module for operation with the player software. The player software may automatically or manually switch from mixed reality to virtual reality mode. The system may further include a server, an access portal, a content module builder, a content module tester, a visor, a webcam, light emitting diodes attached to the visor and a microphone. The method enables a user to obtain the components needed to display mixed reality objects using a computer by connecting the server to a network to communicate with access portals; enabling user access to the server through an access portal; delivering the player software to a user; allowing a user to purchase a content module; and delivering a content module to a user.

## Description

### FIELD OF INVENTION

The invention relates to a network connected media platform for mixed reality applications.

### BACKGROUND OF THE INVENTION

The invention deals with a bifurcated system for mixed reality presentation and a method of using the bifurcated system. Mixed reality is a computer term often used interchangeably with augmented reality, but as used herein has a broader scope. Mixed reality is an umbrella concept that encompasses both augmented reality and augmented virtuality and is a computerized presentation concept well known in the art.

Augmented reality is a combination of real world and computer generated data and typically includes the use of live video imagery which is digitally processed and "augmented" by the addition of computer generated graphics. Augmented reality can be thought of as a first step in a continuum between the real world and virtual reality.

Virtual reality allows a user to interact with a computer-simulated environment, be it a real or imagined one. Virtual reality allows a three-dimensional depiction in a completely virtual environment - there is no view of the real world.

Augmented virtuality is a second step in that continuum between the real world and virtual reality. Augmented virtuality incorporates live visual elements of the real world where most of the imagery is computer-generated. For example, where something real is projected into a virtual environment. Augmented virtuality also refers to virtual spaces where real, physical elements are dynamically integrated.

Thus defined, mixed reality is a virtual world with elements of the real world. Mixed reality represents the convergence of research fields such as computer vision, computer graphics and coding. Mixed reality applications involving the present invention are diverse in industries such as gaming, education, medical, industrial, and marketing. The system for bifurcating mixed reality presentation and the method of using it will significantly expand and improve the current state of the art.

### DESCRIPTION OF PRIOR ART

A significant segment of the prior art in mixed reality and virtual reality applications is focused on making applications simple enough to use for the mass-market. For example, mixed reality content has been inseparably attached to the software that plays it. Thus, a user would need to download, install and configure a new software application for every set of mixed reality content such user desired to use. The result is that it has not been very simple to use, which is a significant barrier to entry for the mass market.

Most other prior art applications are focused on experimenting with new man-machine interfaces or real-world applications, such as, for example, on professionals (medical, engineering, etc.) who would be trained to use it.

An example of the current state of the art in mixed reality presentation for a particular desired use is United States Patent 7,126,558 involving industrial augmented reality. This patent describes detecting visual markers within view of a wearable camera worn by a human worker, and displaying data associated with at least one of those visual markers on a see-through wearable display worn by the operator. Movements of humans are coordinated by detecting visual markers within view of a camera worn by the worker, and determining the location of the worker from the stored location of the visual marker within view of the camera.

Problems created by the marriage of the content and the software in the prior art create barriers to third-party creation of new content operable by the software, and offer little or no ability to organize the publishing, distribution, sale and use of such third party content.

The present invention frees the mixed reality content from the software that plays it, enabling a simple application suitable for use in a mass market. This separation offers important benefits to a software provider, a content provider, and a user.

For a software provider, the separation makes it easier to upgrade the player software without affecting a user's mixed reality content modules. The download package for an upgrade is thus small and easier to store and deliver to a user.

For the content provider, the separation means they do not have to do dedicate many resources to software development. When the software is upgraded, it will automatically improve their content. Also, the download package for a content module is much smaller and the content provider can upgrade the content independently of the player software.

For the user, the separation eliminates the need to upgrade content modules at the same time as the software is upgraded. A smaller download package means less time devoted to a download and eliminates problems with loss of content because content modules are completely separate from the player software. Additionally, the user only needs to install and configure the player software once, placing fewer installation tasks on the user.

The separation of the content from the player software also fosters third-party creation of new content modules operable by the player software and for the first time enables an organizing medium for third parties to easily publish, distribute, and sell those content modules through an access portal connected to a server over a network. An important and innovative organizing medium for an embodiment of the invention is network connected access portal, which adds simplicity of use and access to mixed reality content.

Prior art constrained a mixed reality application because it could not also be used with similar functionality in virtual reality. The present invention enables both mixed reality and virtual reality functionality. Mixed reality functionality is typically accomplished by employing a web camera, also known as a webcam; and, virtual reality is typically accomplished by employing a computer mouse, commonly referred to as a mouse. Thus, with the present invention, if a webcam is plugged in, the invention works in mixed reality mode. If a webcam is not plugged in, it works in virtual reality mode, providing virtual paddles that are movable with a mouse peripheral.

Prior art involving mixed reality applications suffers from a problem of difficult and impractical, if not impossible, access to multiple combinations of mixed reality content and player software over an Network-connected platform. The present invention solves this problem.

As with most mixed reality presentations, the invention uses one or more visual markers, which is preferably shaped in the form of a paddle in the present invention, within the viewing range of the webcam to aid in the addition of the virtual objects in the context of a real world scene. Alternative visual markers may be used, such as those printed in books.

In the prior art, a visual marker is typically square with no handle, however a square with a rectangle projection is known. Also known is a square with a hole or gap and no sharp edges. However, the prior art does not teach the use of a visual marker with a handle having near-parallel handle sides and also none of this design with a hole.

The visual markers of the prior art are typically made of cardboard, some made of ULTRACORE. However, none is made of a non-laminated closed cell foam, such as EVA-350, or injection molded plastic designed to be a durable paddle promoting hand-held use. Preferably, the paddle of the invention is printed using industrial flocking that may be combined with silk-screen printing onto the flock, if necessary.

The prior art typically uses laser printed or inkjet printed paper glued on; printing on a fibrous white felt material and glued onto a board; and hand-cut shapes from material (including adhesive-backed flock sheets), but no industrial flocking process.

Apart from physical design and the material of construction, a paddle of the present invention improves the state of the art by describing a paddle that is optimally: affordable, printable, cutable to final shape and easy to manufacture, finished in matte with no glare that confuses webcams, waterproof, stainproof and washable, durable with resistance to burning, wetting, scratching, tearing, hitting, fading, peeling, dirt), light to minimize shipping cost, rigid but is not so rigid as to hurt if a child was hit with one, and non-toxic.

Accordingly, the present invention will serve to improve the state of the art by providing a device and method that frees mixed reality content from the software that plays it, enabling a simple application suitable for use in a mass market and one that enables an easy process to create, publish, distribute, purchase and use mixed reality and virtual reality technology for diverse presentation techniques. It will improve the state of the art by expanding user options for application operability in mixed reality mode or virtual reality mode. It will improve the state of the art by enabling user access to a combination of mixed reality content and player software over an Network-connected platform. And finally, it will improve the state of the art of visual markers by providing an easily manufactured and durable visual marker promoting hand-held use for optimized mixed reality presentation of an object.

### BRIEF SUMMARY OF THE INVENTION

A system and method enabling the display of mixed reality objects on a computer operated by a user. The system comprises player software that requires a content module to display mixed reality objects and a content module for operation with the player software on a user's computer. The player software optionally enables automatic and manual switching from mixed reality to virtual reality mode. The system may further include a server and an access portal connected to the server. The server stores content modules and related items; user account data; accepts payment from a user; and performs other functions. The access portal enables user interaction with the server, stores the player software, and facilitates in the listing and sale of content modules and related items. The system may include a content module builder, a content module tester, handheld paddles, a visor that incorporates a head mounted computer display, a webcam which may be integrated into the visor, light emitting diodes attached to said visor and a microphone.

The method of the invention enables a user to obtain the components needed to display mixed reality objects using a computer. The method would be implemented by connecting the server to a network to communicate with access portals; enabling user access to the server through an access portal; delivering the player software to a user at the user's request; allowing a user to purchase a content module; and delivering a content module to a user.

### BRIEF DESCRIPTION OF THE DRAWINGS

Referring now to the drawings in which like reference numbers represent corresponding parts throughout:
FiG.1 is a diagram of the preferred embodiment of system components.
FIG.2 is a diagram of an alternative embodiment of system components.
FIG.3 is a diagram of the preferred embodiment of a method of using the system.
FIG.4 diagrams optional functionality for an access portal system component.
FIG.5 diagrams alternative embodiments of the system with optional components.
FIG.6 shows a preferred paddle in an embodiment of the invention.

### DETAILED DESCRIPTION

In the following description, reference is made to the accompanying drawings, which form a part hereof and which illustrate several embodiments of the present invention. The drawings and the preferred embodiments of the invention are presented with the understanding that the present invention is susceptible of embodiments in many different forms and, therefore, other embodiments may be utilized and structural and operational changes may be made without departing from the scope of the present invention.

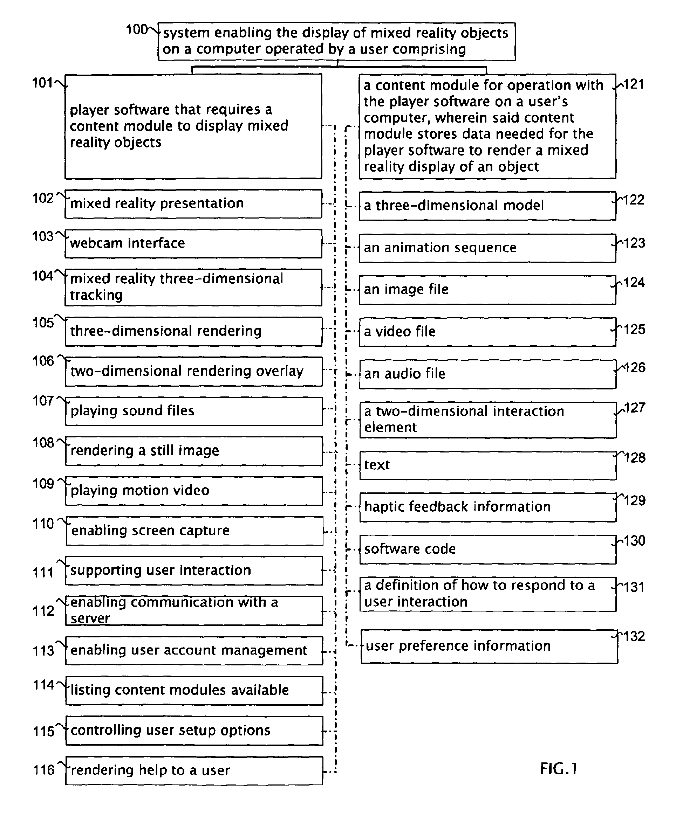

FIG.1 illustrates a preferred embodiment of the system with solid lines indicated needed functions and dashed lines showing optional functions. A preferred embodiment of the apparatus of the invention is a system that enables the display of mixed reality objects on a computer operated by a user (100). This system is composed of player software (101) and a content module (121). For purposes of this disclosure the term computer is defined broadly to include any device capable of computing, examples include portable computers: laptops, tablet PCs, UMPCs, PDAs, cellphones, etc.

The player software (101) requires a content module to display mixed reality objects. The player software (101) may implement one or more of the following software functions: mixed reality presentation (102); webcam interface (103); mixed reality three-dimensional tracking (104); three-dimensional rendering (105); two-dimensional rendering overlay (106); playing sound files (107); rendering a still image (108); playing motion video (109); enabling screen capture (110); supporting user interaction (111); enabling communication with a server (112); enabling user account management (113); listing content modules available (114); controlling user setup options (114); and rendering help to a user (116).

Reference in this disclosure to webcam is intended to specify and include any type of camera that captures video (or visual information) of the real world, digitizes the video, and transmits it to a computer. For example, personal computer cameras, camcorders, various analog cameras including Broadcast television cameras run into a video digitizing card, and television cards inserted into a computer motherboard.

The content module (121) is for operation with the player software on a user's computer. The content module stores data needed for the player software to render a mixed reality display of an object. Data needed for the player software to render a mixed reality display of an object is one or more of the following data: a three-dimensional model (122), an animation sequence (123), an image file (124), a video file (125), an audio file (126), a two-dimensional interaction element (127), text (128), haptic feedback information (129), software code (130), a definition of how to respond to a user interaction (131), and, user preference information (132).

Haptic feedback information (129) is what is the user receives as a tactile sensation when interacting with the mixed reality presentation. The software code (130) is pre-compiled script or compiled software, such as typical dil (dynamic link library) files. The software code typically fits two categories: Initialization - things that are run once at the start of operation (131), and 'process' - things that run constantly every frame, and therefore can react to user interaction (or create script based animation). Examples of a definition of how to respond to a user interaction (131) include placing which content on which paddles, which audio to play on startup, what instruction text should displayed and how it should it be displayed on startup, and requiring that the content on an information paddle should change when it gets within 160 millimeters of an adjacent paddle. An example of user preference information (132) a user's position or status in the game saved by a user for later loading to resume a game. This data is related to a single module and could therefore be stored in it. However, storing this type of data would preferably engage player software communication with the server, so that a saved game would be available should this user login using another computer.

An alternative preferred embodiment of the system includes player software that implements one or more of the following software functions: enabling screen capture (110), supporting user interaction (111), enabling communication with a server (112), enabling user account management (113), listing content modules available (114), controlling user setup options (115), and rendering help to a user (116). These are shown in FIG.1 connected by dashed lines.

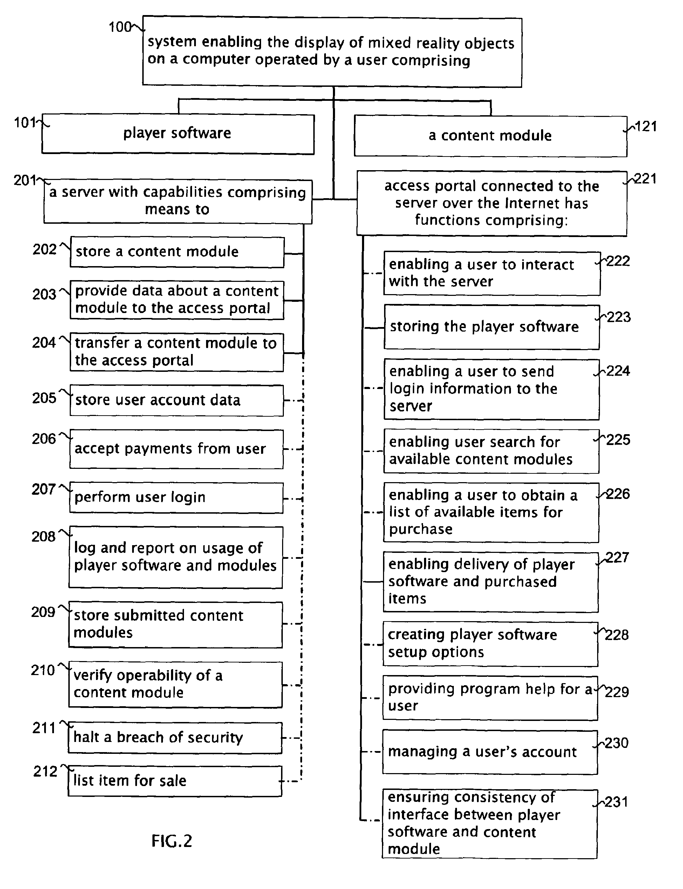

FIG.2 illustrates an alternative embodiment of the system that includes a server (201) and an access portal (221) connected to the server over a network. The network may be any digital communications network. For most applications the network is the Internet. Less frequently, the network may be something other than the Internet: for example, devices like some cellphones have access to a network run by the phone company.

The server (201) has capabilities including means to: store a content module (202); provide data about a content module to the access portal (203); and transfer a content module to the access portal (204).

The server has capabilities that may include means to: store user account data (205); accept payments from a user (206); track each date, time and computer a user account is used on (507); halt a breach of security (211); list an item for sale (212), which is in addition to a content module; perform user login (207); log and report on usage of player software and modules (208); store submitted content modules (209); allocate a portion of an amount accepted from a user for a content module for delivery to the creator of the content module (508); and, verify operability of a content module (210).

Concerning the capability to store submitted content modules (209), there are three types of content modules: 1) trial content module that a content developer is testing; 2) a content module that the content developer has finished and submitted for publishing, which at this stage is not yet published, as it must be verified for acceptability; and, 3) published modules.

The access portal (221) has functions comprising: storing the player software (223) and enabling delivery of player software and purchased items (227). In FIG.2, these boxes are connected with a solid line. Other optional functions are shown with a dotted line. For purposes of the invention a purchased item may also include one selected for purchase at zero cost, such as a free download of a content module.

The access portal (221) may also have one or more of the following functions: enabling a user to interact with the server (222); enabling a user to send login information to the server (224); enabling user search for available content modules (225); enabling a user to obtain a list of available items for purchase (226); creating player software setup options (228); providing program help for a user (229); managing a user's account (230); updating the access portal and the player software to a newer version (427) and updating each of the content modules to a newer version (428). User interaction with the server is optional because for example, an access portal could list content modules available on a DVD and install the ones selected to the users computer, thus making server interaction optional.

The access portal (221) is preferably a software application that can be run, for example on a user's computer or on a kiosk at a store. The access portal (221) has a function (222) of enabling a user to interact with the server by centralizing tasks associated with offering a content module (121) to a user, downloading and installation of a content module upon a user request, and provides a means to set player software configuration that applies to all content modules. Thus, FIG.2 identifies the access portal function (231) of ensuring that the interface between player software and a content module is consistent for the end user. This function assures that the access portal (221) ensures that setup and calibration of peripherals such as a mouse, camera, display and sound devices can be configured once for the player software and then used for all of content modules.

There can be different versions of the access portal (221) that connect to either the same or different servers. Differences in the access portal versions could as simple as different branding to acknowledge different corporate sponsors. Access portals could be reasonably different as between a home version (where for example any user can log out and buy modules) and a school version (where for example only an administrator could log out and buy modules). Access portals could be substantially different as between a home version that lets any module be run any time and a Kiosk version that can only load a single module, which automatically runs when the computer is turned on.

In addition a content module can be, or include, an executable software. In this way, not only third party content but third party software could be published, distributed, purchased and used through the access portal.

The access portal function (225) of enabling user search for available content modules is partly satisfied by a accessing a collated list of content modules available to the user. Additionally, the access portal may search, for example, over the Internet or through a restricted group of dedicated servers, to find and list all content modules the user could obtain. While content modules might be offered for sale at a price, it is also possible for the creator of a content module to offer that module free of charge. If a content module is not installed, but listed as available, then the user might elect to obtain that content module. For a content module listed for sale, the access portal would allow the user to purchase or lease the content module on-line and, after such purchase or lease, the module could then be downloaded and installed on the user's computer to work with the player software on the terms of the acquisition.

The access portal function (230) of managing a user's account is partly satisfied by storing information on the server, which in turn serves to interact with any access portal employed by the user. The access portal function (222) of enabling a user to interact with the server supports the function (230) of managing a user's account. For example, security is based around a user account stored on the server. When a content module is requested (and paid for if so required), ownership of the content module is designated in a user's account. Content modules that are so designated can then be downloaded and installed into an access portal on another computer and made functional with the player software for that user after that user's login at that computer. If that user logs out of a computer, the content modules can still remain installed, but can be disabled so they cannot run. If another user logs in and has either previously purchased or subsequently purchases that module, they will have access to the version that has already been downloaded and installed - they will not need to download and install the module again. Preferably, a server tracks each date, time and computer an account is used on. If a security breach is detected, the server halts the breach, by actions such as limiting access to modules, freezing, blocking, modifying or deleting the account, or resetting the account password. A security breach is typically detected by observing a violation of a term of a user agreement accepted by a user when the account is created.

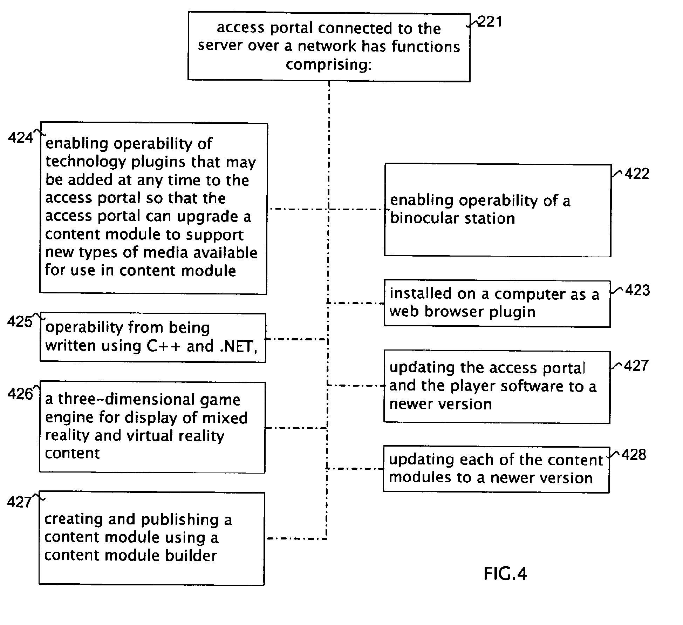

FIG.4 identifies optional functionality for the access portal (221). Optional functionality is shown with dotted lines in FIG.4. The access portal is preferably modular in order to support the distinction between technology platform, player software and content module. Modular is intended to mean that the access portal is built in independent modules that can be added or removed without compromising the overall functionality of the access portal. For example, software for tracking markers may be in one content module. If a new software for this purpose were developed, the modular nature of the access portal would permit the swapping out of the original tracking software for the new tracking software. When an end user ran an online update for the access portal (428), that would update to the new tracking software, and the users might otherwise never know the new tracking software was inserted and the old one deleted.

The access portal may, thus, have a function (424) of enabling operability of technology plugins that may be added at any time to the access portal. Technology plugins enable the access portal to upgrade a content module to support new types of media available for use in content module. New types of media include, for example, audio, video, mixed reality content or virtual reality content. So, examples of technology plugins include: audio codecs and mixed-reality tracking libraries, such as a natural feature tracking libraries, which would allow the player software to track images that were more complicated than black squares.

The access portal may be given a function (425) that provides added operability from being written using C++ and .NET, so that it is platform-independent.

The access portal may be given a function (426) that includes a three-dimensional game engine for display mixed reality and virtual reality content. Also, the access portal and/or player software may be installed on a computer as a web browser plugin (423).

An alternative embodiment of the access portal includes a function of enabling operation of a binocular station (422), similar to a binocular station at an airport, except with a display device and lenses and webcam in the head of the binocular station, instead of a set of binocular magnification lenses. The binocular station provides a means to present the mixed-reality experience with the module content. The operation of a binocular station has the following two options: 1) the binocular station tracks black squares in the environment, and thus would operate identically to the normal mixed reality use, except a different variant of the access portal may be used, which is more suited to kiosk use (automatically loads a specified module on startup, etc.); and, 2) the binocular station tracks the real world using rotation sensors instead of black squares. This is implemented by either streaming the sensor data directly into the game engine (via network socket communication, etc.), or by adding a technology plugin to the player software that can access the sensor data and use that instead of using the marker tracking data.

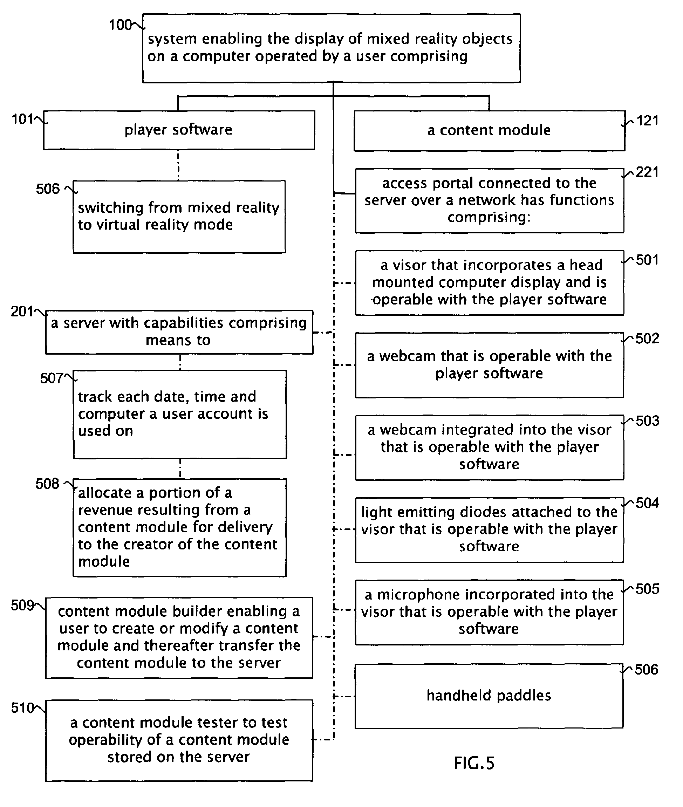

FIG.5 shows alternative embodiments of the system with optional components. Optional components are shown with dotted lines in FIG.4. An alternative embodiment (509) of the system with a server also includes a content module builder, which enables a user to create or modify a content module and thereafter transfer the content module to the server.

A content module builder enables three-dimensional modeling, texturing and animation to occur in professional, three-dimensional modeling environments (such as 3D STUDIO MAX) and be seamlessly ported into a content module. A module builder can also function as a centralized collection of alternative media and script that may be added to a content module and to facilitate the addition of media and script to a content module. Script is commonly used for animation, interactivity and other mixed-reality functions. The person building the module does not have to have in depth programming experience as the complexity of the code is hidden, allowing use of a selection of simpler commands in a script file. A set of interaction techniques can be easily re-used with different content in different modules. An advantage of this technique is that malicious code cannot be incorporated as the script will not support it.

An example of the use of a content module builder is: a user-developer would import content into a module builder, add a script for interaction and preview the result. In this example, the result would be limited to virtual reality mode to prevent the user-developer from sending this version of the module to unpaying users. Another example is: A content module developer could upload a content module as a trial content module. Trail modules can be shared with other people and can optionally be viewed in mixed reality mode, but can have certain restrictions applied to them like only being available for a limited time, only being available to a limited number of users and only being able to be viewed through a trial module player. Once completed, the user-developer would click Publish and the content module would be uploaded into a holding area on the server to be checked, and if successfully verified, would then be added to the list of content modules available through the access portal. Before publishing, the user-developer would specify a price to charge for the content module and the details of how to pay the user-developer, thus making the purchase and developer recompense process seamless and able to be automated.

An alternative embodiment (427) includes an access portal with a function further comprising creating and publishing a content module using a content module builder. Content module creation applications (3D modelers, etc.) may also be added to the access portal as content modules or as technology plugins to feed into the module builder and this is encompassed in the functionality shown at (424). Typical technology plugins include a media rendering plugin wherein the access portal can upgrade a content module to support new types of media available for use in content module; a module builder plugin; and a content creation plugin, such as a 3D modeler.

An alternative embodiment (510) of the system with a server includes a content module tester to test operability of a content module stored on the server. Testing operability is an added functionality of the system to ensure that a content module's interface with the player software is consistent for each user and so that setup and calibration of user computer peripherals is uniformly configured.

An alternative embodiment (508) of the system with a server also has capability to allocate a portion of a revenue resulting from a content module for delivery to the creator of the content module. Typically, revenue might be derived from the sale of a content module to a user, or an advertiser paying for product placement.

An alternative embodiment (506) of the system requires that the player software implement software functions for switching from mixed reality to virtual reality mode. Such switching may be automatic or manual. For this embodiment, the virtual reality mode typically provide virtual paddles movable with a mouse and keyboard. If virtual paddles are not used in virtual reality mode, the objects on the paddles are moved around the virtual reality world using other techniques, e.g., clicking and dragging on the content itself.

The mixed reality mode may be engaged using a webcam mounted on a head mounted computer display and the webcam is operable with the player software (502). For this type of engagement, a web cam is directed at black squares on paddles and presents the mixed reality experience on the head mounted computer display screen. Some head mounted computer displays are 'optical see-through,' which means instead of displaying video of the real world, they only display video of the artificial elements - the display is semi-transparent (a half-silvered mirror) so the real world is actually directly visible through the display.

Alternatively, many users will not have a head mounted computer display, and so may engage the mixed reality mode using a webcam mounted on a desk, on a computer screen or held in the user's hand. The user then either a) points the webcam down at a desk where the markers are, or b) points the webcam at themselves, and holds paddles over their body to 'wear' mixed-reality content.

In any engagement, a mixed reality experience delivers virtual content on a representation of the real world. Mixed reality is not restricted to video. For example, optical-see technology noted above is not video - the user is seeing the actual real world.

The virtual reality mode presents virtual models. The models can be manipulated on the computer display screen using a keyboard and mouse present on a user's computer. The virtual reality mode is equivalent of a 3D game in completely virtual reality - there is no view of the real world. It is designed to provide an option in case there is no access to a webcam.

The access portal provides an advantage in utilizing an embodiment enabling switching between the mixed reality mode and the virtual reality mode. The access portal provides the infrastructure or means to use exactly the same content module for both the mixed reality mode and the virtual reality mode. Therefore, once the content module has been built, there is no additional work required to reconfigure it for the two different modes. It is noted, however, that the content module may support different content and interaction for the mixed reality mode and the virtual reality mode.

Alternative embodiments of the system include additional components operable with the player software. Such embodiments may include one or more of the following additional components: a visor that incorporates a head mounted computer display; a webcam (501), which may be integrated into the visor (503); light emitting diodes attached to the visor (504); a microphone incorporated into the visor (505); and, handheld paddles (506).

The light emitting diodes would typically be mounted on the front of the visor to illuminate the area seen and to improve mixed-reality tracking. Typically, the light emitting diodes would be controlled via software, from a switch on the head mounted computer display or from a switch on the cable running from the head mounted computer display.

Preferably the webcam, head mounted computer display, sound and power are connected to the computer via a single cable, such as a single USB cable, or with a wireless communications system (wireless USB, BLUETOOTH, WI-FI, ZIGBEE, etc). The visor has the advantage of placing the virtual objects directly in line-of-sight and is therefore more immersive than simply looking at a computer screen. An example of a preferred visor is one with a clip-on handle to allow use in the manner of a masquerade mask. The microphone is preferably incorporated into the head mounted computer display for voice activation and third-party collaboration in the mixed-reality experience.

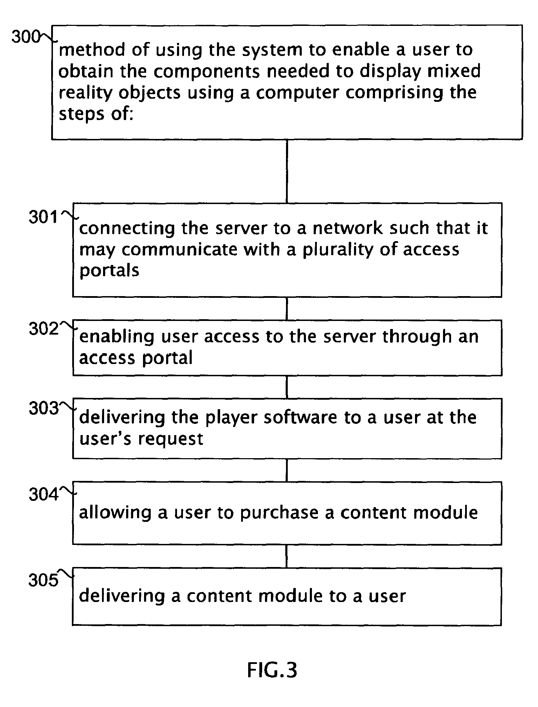

FIG.3 diagrams a preferred method of using an embodiment of the system with a server. This method (300) enables a user to obtain the components needed to display mixed reality objects using a computer. The steps of this method include a first step (301) of connecting the server to a Network such that it may communicate with a more than one access portal; a second step (302) of enabling user access to the server through an access portal; a third step of (303) delivering the player software to a user at the user's request; a fourth step (304) of allowing a user to purchase a content module; and a fifth step (305) of delivering a content module to a user.

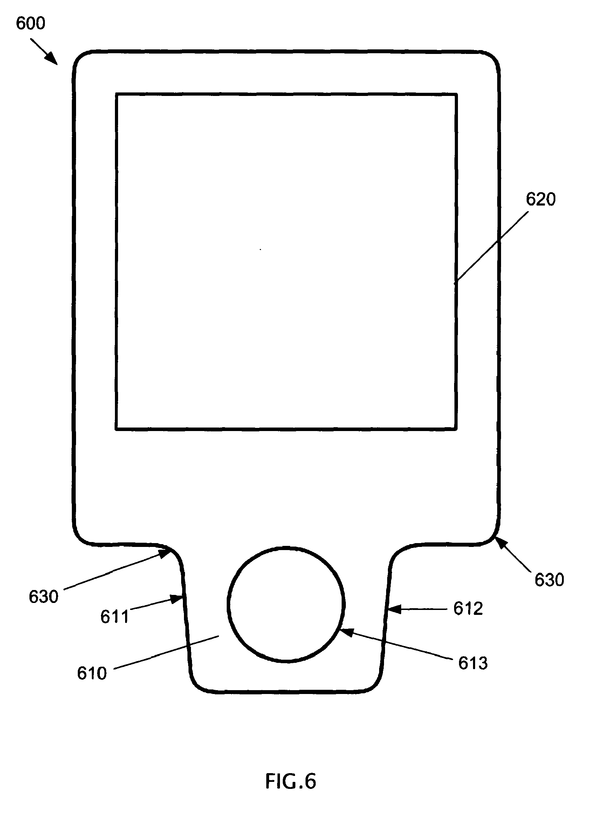

FIG.6 shows a preferred paddle (600) in an alternative embodiment of the invention, which enables the mixed reality display of an object. A variety of paddle designs broadly enables different objects and/or interactions to be optimally associated with it. Preferably, a paddle has the following elements: a handle (610) with nearly parallel sides (611 and 612), so that the paddle can be easily gripped in a human hand; formed to define a columnar hole (613) of sufficient size for a user's thumb to be inserted through the paddle (600), making it easier to hold and rotate the paddle and to eliminate the possibility of a user's thumb obstructing the visual marker area defined by the square (620); a gap between the handle (610) and the square (620) of size sufficient to reduce obstructing visual marker printing (not shown) within the square (620). The gap may be used for a label. Rounded corners (630) reduce risk of injury during any improper use, for example in rough play by children swinging the paddles in play.

The paddles are preferably made of closed cell foams, such as EVA (ethyl-vinyl-acetate copolymers), PE (polyethylene), or PVC (polyvinyl chloride). Other materials in decreasing order of desirability are closed cell, chemically cross-linked polyolefin foams; foam board made of rigid foam with thin laminates of paper or plastic on each side, such as ULTRACORE, ULTRABOARD; foam PVC (polyvinyl chloride e.g. SUNBOARD); polypropylene; laminated cardboard (formakote, pulp cardboard, corrugated cardboard); cardboard; lamination of a matte material onto any of the backing materials above, wherein the laminate may be (in order of decreasing applicability): flocked sheet, billiard cloth, velvet, felt, suede, faux suede, many fabrics (cotton etc), thermal backed curtain material, paper.

The visual marker printing within the area defined by the square (620) on a paddle (600) is preferably applied by industrial flocking using any one of several methods, including using electrostatic stencil plates in the shape of the marker, using electrostatic stencil plates in the inverted shape of the marker; flocking the entire surface and screen printing onto the flock the shape of the marker; and, flocking the entire surface and screen printing onto the inverted shape of the marker.

Flocking typically includes a spray flocking process wherein glue is applied to the surface, then sprayed with short fibers, preferably 0.5mm long. Alternative processes include applying the flock to a static metal plate through a screen, then reversing the static to place the flock in a precise pattern on the foam; flocked thermal transfers; screen printing, which includes curing by evaporation, infra red, ultraviolet (uv); inkjet printing; and laser printing.

Cutting the final shape of the paddle is preferably performed by die cutting. Other cutting methods in order of decreasing applicability include: hi-pressure water, CNC router, router, bandsaw, and laser.

The preferred combination of techniques for paddle manufacture involve a balance of variables (e.g. trading price for durability). The preferred techniques in order of preference were: A) Closed cell foam (EVA 350 best) or PVC foam starting material; spray flock (0.5mm flock is best) entire sheet and screen print onto it (evaporation or uv curing best), or industrial flock application in the exact shape of the marker (EVA foam needs a primer (e.g. BOSTICK EVA6) used first to make other adhesives stick properly) (printing white on black material or vice versa); then die cut (best) or CNC router cut into paddle shapes. B) Closed cell foam (EVA 350 best) or PVC foam starting material; screen print directly onto it (evaporation or uv curing best) (EVA foam needs a primer (e.g. BOSTICK EVA6) used first to make other adhesives stick properly) (printing white on black material or vice versa); then die cut (best) or CNC router cut into paddle shapes. C) Laminated cardboard, screen printed and die cut.

An embodiment of the invention includes safe frames, which control computer tracking of the camera field of view. Essentially, safe frames employs cropping of the field of view of the webcam. Without safe frames, if any of the visual marker within the area defined by the square (620) on a paddle (600) disappears out of the camera's field of view, the tracking of it stops and the mixed reality object on it disappears. Safe frames involves a setting that displays only part of the camera's true field of view, so that if a corner of the visual marker disappears out of the user's view, tracking continues as the computer can still see the whole marker. Safe frames may also include a visual feedback signal, such as an area glows red if a corner of the visual marker were to disappear out of the user's view. The visual feedback signal is a means to encourage and train a user to avoid moving the visual marker out of the field of view.

Other embodiments have additional elements. A first element is controls to auto benchmark and adjust performance settings. This element introduces a capability for the player software to analyze the frame rate and CPU usage, and if it is running too slow, then change settings, such as disable particles and reduce camera resolution, to make the mixed reality or virtual reality scene run faster.

A second is auto camera detect and calibrate functions. Mixed reality works best if the camera distortion is known. Cameras can be calibrated to find the distortion, but this is hard for the end user to do. This element checks the USB ID and device name of the camera and matches it to a database. The database includes the USB ID / device names of many cameras with corresponding calibration data. So, the access portal can automatically detect the type of camera and automatically select the appropriate calibration data for it. Users can also make their own calibration profile and use that instead, and use the access portal to submit that to the database. Unknown cameras can use a generic calibration. This element may also warn users when their camera is not a known type. Also, the element enables the access portal to detect all video capture devices and let the user choose the one they want to be used for mixed reality.

A third element is automatic thresholding alerts to alert the user when the less than optimal conditions of lighting or other conditions are present. The player software automatically and intelligently (combination of random and directed 'scanning') changes the thresholding values used in the mixed reality tracking. Once the player software finds a visual marker at a certain threshold, it can 'scan' around that area to refine tracking. If the thresholding is nearing a limit, the player software can optionally give feedback to the user stating that the user should make the scene lighter or darker to improve tracking.

A fourth element is enabling combinations of user, marker and content to interact in useful ways, such as relative scaling of content on two adjacent markers. Another example is rendering a scene from a different perspective and then using that as dynamically-created content. An example would be having content of the Earth and the Moon on two adjacent markers, and rendering an image of the Moon when viewed from the surface of the adjacent Earth. This dynamically-created image of the Moon is treated like content in that is can be placed on a marker, or it can be rendered as a 2D overlay in the corner of the screen. Another example would be creating a 'do not render here' 3D object the shape of a person, and placing that inside a piece of virtual clothing. When the user holds the clothing over their body, they can see their body within the openings of the virtual clothing.

When appropriate, certain markers will perform standard interactions that users can become familiar with as they use a variety of modules. For example, touching the 'i' paddle to an object will display text about that object on the 'i' paddle and may trigger an animation of the object. '7' can be used to point to other objects, and 10 can be used as a magnifier - the closer it gets to another object, the larger the object gets. Also, when the text on an information paddle is visible, the user might hit a key, e.g., spacebar, to zoom the text up to fill the screen so that it is easier to read. The text can be stored in multiple languages and one specific language be used according to settings in the access portal or player software.

The magnifier could also have a bounding box so that as the object gets bigger than the bounding box, a cut-away of the object is shown on the sides of the bounding box, so it becomes a slicing tool. Or the 3D object could be enlarged to a set size (either by default or triggered by interaction such as proximity to '10') and another marker (maybe '4') can move the 3D object through the view volume. A paddle could be a tool for removing layers, for example removing a covering (e.g., skull) to reveal what is inside (a brain).

Symbols like +-/*= can be used in markers for mathematical interaction, for example, making and solving mathematical problems with the variables shown in 3D, such as cubes, or slices of a pie. Mathematical interaction can also be shown by having two objects (e.g., a row of 3 cubes and a row of 4 cubes) and having them 'calculate' as they are bought closer together (to form a grid of 3x4 or 12 cubes). This can be done with more than 2 paddles (3x4x5), with other mathematical operators (e.g., +-*/ x^{y}) and with other representational objects, such as cubes, pie slices, and parts of a single sphere.

Other standard interaction include holding two objects close to each other - when they get close enough, they interact (two planets can scale to relative sizes, two characters can fight etc). You can use physics simulations based on the position of paddles. E.g. two paddles represent magnets, so physics simulation represents their magnetic fields based on position and direction of the 'magnets'. You can also create a 3D jigsaw puzzle - have a series of paddles representing 2D or 3D pieces (e.g., of a fossil) that have to fit together in a certain way to complete the puzzle (could be rewarded by the fossil coming to life).

With sufficient interaction scripting, full interactive games can be created in this medium, e.g. mixed reality chess, real time strategy games, or completely new game concepts.

For example, you can have a spatial puzzle where an object is being deformed by various parametric formulas influenced by variables that map to the 6 degrees of freedom (x, y and z rotation and x, y and z position). So that as you move the paddle from side to side the X-position variable changes and the object deforms according to parametric (or other) equations that use the X-position variable. The aim is for the user to make the object deform in a certain way - probably into a target shape. That target maybe a perfect sphere or other recognizable object (famous face etc), or another random or parametrically generated object. The target object could be shown on another paddle or on the same paddle (shown over the puzzle object, or the user could toggle between the puzzle and target object). If overlaid, the game could show the positive (e.g., red) and negative (e.g., blue) differences between the two objects. The target object could be shown rendered directly to an area of the screen. The target object could be rotating regularly or rotating in sync with the puzzle object.

As a simple variation of this, 3D objects could animate according to their 6DOF data, for example, a creature head could open its mouth more the more you tilt it forward.

Objects can also react to the gaze of the camera. A crosshairs (e.g., at the center of the field of view) could be displayed. When the crosshairs touches or approaches an object (e.g., bird), it responds (animates, or its sound gets louder). Objects could be cloned, deleted or highlighted by the crosshairs, then selected, grabbed, or held in the crosshairs, and released somewhere else. Actions could be triggered by paddle interaction (relative to another marker, relative to the screen or relative to the user) or other (keyboard etc) interaction, or hover - if the crosshair remains for 3 seconds it triggers (e.g., this could be visualized as a growing dot or circle). Different types of events that could be triggered include: Sound playing, sound properties (e.g., volume, pitch, delay, flange, and cutoff), object (including 2D images, 2D movies, 3D objects and 3D animations or combinations thereof) (not necessarily the object being gazed at) visibility, object animation (of shape, size, texture or position), or environmental properties, such as lighting levels, camera stability, score in a game, and 'life' of a game character.

The above described elements can be described as providing an information paddle with activation and zoom; dynamically-created content, magnifying interaction, removing layers, mathematical interaction, proximity interaction, physics interaction, 3D jigsaw pussle, spatial puzzle and gaze-based interaction.

Other markers beyond the 12 on the paddles can be used, so e.g., a real physical book could have other markers on it, so the user can see an AR book overlaid over the VR book and still use the paddles to interact with the story (move the 'main character' (or something else) so they can interact with other objects on the screen, or move objects (food, tools, actors etc) to the 'main character' (or something else) so they can interact, or change the environment (sound, light, object color, size etc).

Other markers could be embedded into objects, e.g., books, magazines, take-away food packaging, any other printed material, hats, badges, toys, mats that you unroll across a tabletop, computer hardware such as a mouse. Other markers could be able to be attached to the above objects, or others such as clothing, whiteboards, walls or people (to make virtual clothing). Attachments can include magnetic, VELCRO, adhesive, suction cups and wrap-around bands.

The webcam can also be placed on the computer monitor and used as an AR mirror, so that if the users are using (e.g., wearing) any markers, they see themselves and the 3D objects on the markers (such as body parts, clothing, and creature heads).

Kiosks could have replaceable veneers that show different markers, or show different instructions or images for the same markers. Other external interaction devices (such as buttons and sliders) could interact with the access portal content. These devices could plug in to a modular kiosk design. The different veneers could then accommodate different devices. Modular devices and replaceable veneers also make worn kiosks easy to repair, and make it easy for non-technical personnel to change the kiosk to support new modules.

The last element is marking paddles visible but showing no content with a generic image of a circle with a line through the empty paddles. The last element is important to avoid user frustration by indicating that empty paddles within view are not intended to display anything as distinguished from the possibility that they were intended to display something, but the camera is not tracking them properly.

## Claims

1. A system enabling the display of mixed reality objects on a computer operated by a user comprising:
(a) player software that requires a content module to display mixed reality objects; and,
(b) a content module for operation with the player software on a user's computer, wherein said content module stores data needed for the player software to render a mixed reality display of an object.

2. The system of claim 1 wherein said player software implements software functions selected from a group consisting of: mixed reality presentation, webcam interface, mixed reality three-dimensional tracking, three-dimensional rendering, two-dimensional rendering overlay, playing sound files, rendering a still image, playing motion video; enabling screen capture, supporting user interaction, enabling communication with a server, enabling user account management, listing content modules available, controlling user setup options, and rendering help to a user.

3. The system of claim 1 wherein the data needed for the player software to render a mixed reality display of an object is selected from a group consisting of: a three-dimensional model, an animation sequence, an image file, a video file, an audio file, a two-dimensional interaction element, text, haptic feedback information, software code, a definition of how to respond to a user interaction, and, user preference information.

4. The system of claim 1 further comprising a server and an access portal connected to the server over a network,
(a) wherein the server has capabilities comprising means to: store a content module; store user account data; provide data about a content module to the access portal; and transfer a content module to the access portal; and,
(b) wherein the access portal has functions comprising: storing the player software, enabling delivery of player software and purchased items.

5. The system of claim 4 where a server has capabilities selected from a group consisting of means to store user account data; accept payments from a user; track each date, time and computer a user account is used on; halt a breach of security; list of an item for sale; perform user login; log and report on usage of player software and modules; store submitted content modules; allocate a portion of a revenue resulting from a content module for delivery to the creator of the content module; and, verify operability of a content module.

6. The system of claim 4 wherein the access portal has a function selected from a group consisting of: enabling a user to interact with the server, enabling a user to send login information to the server, enabling user search for available content modules, enabling a user to obtain a list of available items for purchase, creating player software setup options; providing program help for a user; and managing a user's account, enabling operability of technology plugins that may be added at any time to the access portal so that the access portal can upgrade a content module to support new types of media available for use in content module; enabling operability of a binocular station; operability from being written using C++ and .NET; and, creating and publishing a content module using a content module builder.

7. The system of claim 4 wherein the access portal is installed on a computer as a web browser plugin.

8. The system of claim 4 wherein the access portal further comprises a three-dimensional game engine for display of mixed reality and virtual reality content.

9. The system of claim 4 further comprising a content module builder enabling a user to create or modify a content module and thereafter transfer the content module to the server.

10. The system of claim 4 further comprising a content module tester to test operability of a content module stored on the server.

11. A method of using the system of claim 4 to enable a user to obtain the components needed to display mixed reality objects using a computer comprising the steps of:
(a) connecting the server to a network such that it may communicate with a plurality of access portals;
(b) enabling user access to the server through an access portal;
(c) delivering the player software to a user at the user's request;
(c) allowing a user to purchase a content module; and,
(d) delivering a content module to a user.

12. The system of claim 1 wherein the player software implements software functions further comprising switching from mixed reality to virtual reality mode.

13. The system of claim 1 further comprising components operable with the player software, selected from a group consisting of:
(a) a visor that incorporates a head mounted computer display;
(b) a webcam;
(c) a webcam integrated into the visor;
(d) light emitting diodes attached to the visor;
(e) a microphone incorporated into the visor and,
(f) handheld paddles.

14. The system of claim 1 further comprising a handheld paddle shaped with a handle having nearly parallel sides, said handle formed to define a columnar hole of sufficient size for a user's thumb to be inserted through the paddle, wherein visual marker printing is within an area of the paddle physically separated from the handle,

15. The system of claim 1 further comprising a visual marker made from closed cell foam selected from a group consisting of ethyl-vinyl-acetate copolymers, polyethylene and polyvinyl chloride.

16. The system of claim 15 wherein visual marker printing is applied by a method selected from a group consisting of electrostatic stencil plates in the shape of the marker, electrostatic stencil plates in the inverted shape of the marker; flocking the entire surface and screen printing onto the flock the shape of the marker; and, flocking the entire surface and screen printing onto the inverted shape of the marker.
